# EUROPÄISCHE PATENTSCHRIFT

(11) **EP 2 881 629 B1**
(45) Veröffentlichungstag und Bekanntmachung des Hinweises auf die Patenterteilung: **24.05.2017**
(21) Anmeldenummer: 14003770.6
(22) Anmeldetag: 10.11.2014
(51) Int. Cl.: F01L 3/08, F16J 15/3236, F16J 15/16

(54) **Dichtung**
Sealing
Joint d'étanchéité

(30) Priorität: 03.12.2013 DE 102013018108
(43) Veröffentlichungstag der Anmeldung: 10.06.2015
(73) Patentinhaber: Carl Freudenberg KG, 69469 Weinheim (DE)
(72) Erfinder: Heldmann, Ralf, 69483 Wald-Michelbach (DE); Clemens, Markus, 64385 Reichelsheim (DE); Jakob, Ernst, 64668 Rimbach (DE); Ziegler, Günter, 68259 Mannheim (DE)

(56) Entgegenhaltungen:
- EP-A1- 2 385 278
- EP-A2- 0 156 136
- US-A1- 2009 146 379
- US-A1- 2010 237 565
- US-A1- 2012 152 111
- US-A1- 2014 265 139
- US-B1- 6 367 812

## Beschreibung

Die Erfindung betrifft eine Dichtung, umfassend einen Dichtring aus einem gummielastischen Werkstoff, einen Zwischenring aus einem polymeren Werkstoff und einen Stützring, wobei der Dichtring, der Zwischenring und der Stützring konzentrisch zueinander angeordnet sind wobei der Dichtring und der Stützring jeweils auf den einander axial abgewandten Seiten des Zwischenrings angeordnet sind und wobei der Dichtring, der Zwischenring und der Stützring eine vormontierte Einheit bilden.

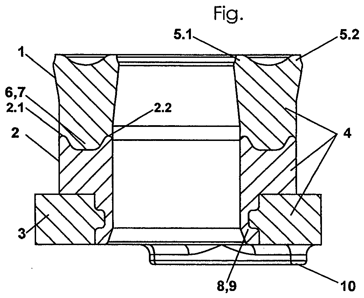

Eine solche Dichtung ist aus der US 2009/0146379 A1, Figur 5, bekannt. Der Dichtring der vorbekannten Dichtung kann aus einem elastomeren Werkstoff bestehen, ist C-förmig ausgebildet, hat dadurch eine axiale Öffnung und weist die Form eines Nutrings auf. Der Dichtring umfasst zwei Radialdichtlippen, von denen die eine radial innen, die andere radial außen angeordnet ist und die einander mit radialem Abstand benachbart zugeordnet sind.
Auf der der Öffnung des Dichtrings axial abgewandten Seite des Dichtrings sind zwei Stützringe angeordnet, die einander axial benachbart zugeordnet sind und einander anliegend berühren, wobei der Dichtring und der axial zum Dichtring benachbart angeordnete Stützring durch Rastnasen miteinander verbunden sind.
Die beiden Stützringe können haftend miteinander verbunden sein.

Die beiden Radialdichtlippen berühren die jeweils abzudichtenden Maschinenelemente unter radialer Vorspannung anliegend.
Die Aufgabe, die durch die vorbekannte Dichtung gelöst werden soll, wird darin gesehen, die Formstabilität der Dichtung zu verbessern, insbesondere eine Verkrümmung, ein Kaltfliessen und ein Kriechen der Dichtung zu minimieren.

Eine weitere Dichtung ist aus der DE 698 28 475 T2 bekannt. Die Dichtung ist als Radialwellendichtring ausgebildet und umfasst einen Dichtring aus einem gummielastischen Werkstoff, wobei ein Zwischenring als zweite Dichtungslippe ausgebildet ist und aus einem Kunststoff besteht. Der Dichtring und der Zwischenring sind an einem Stützring festgelegt.

Eine weitere Dichtung ist aus der DE 102 93 217 T5 bekannt. Die Dichtung ist als Komposit-Bauteil ausgeführt und umfasst einen aus einem steifen Substrat geformten Stützring und einen nachgiebigen, aus einem polymeren Material geformten Dichtring.

Aus der DE 197 04 630 A1 ist eine weitere Dichtung bekannt, die als RadialDichtung für Linearkugellager ausgebildet ist. Die Dichtung umfasst eine Ringscheibe, von der beidseitig jeweils mindestens ein axial gerichteter ringförmiger Vorsprung ausgehend angeordnet ist, wobei die beidseitig der Ringscheibe angeordneten Vorsprünge unterschiedliche Durchmesser aufweisen. Die Ringscheibe weist am äußeren Rand einen hülsenförmig ausgebildeten und mit einem ringförmigen Wulst versehenen Abschnitt zur Befestigung in einer Aufnahmebohrung auf.

Außerdem ist eine Dichtung bekannt, bei der der Dichtring, der Zwischenring und der Stützring jeweils separat hergestellt und während der Montage an einem abzudichtenden Maschinenelement zu einem

Dichtungspaket komplettiert werden.
Dabei stützen sich alle Ringe des Dichtungspakets ungehaftet an den jeweils axial benachbarten Ringen ab.
Die Montage der zuvor beschriebenen Dichtung ist aufwändig und wenig prozesssicher, weil die einzelnen Ringe während der Montage am abzudichtenden Maschinenelement zu der Dichtung komplettiert werden müssen. Insbesondere der Dichtring kann bei der Montage leicht beschädigt werden. Die Dichtung erreicht aufgrund einer wenig exakten Positionierung der jeweiligen Ringe relativ zueinander und aufgrund einer möglichen Spaltextrusion des Dichtrings nur ein wenig zufriedenstellendes Abdichtungsergebnis.

Der Erfindung liegt die Aufgabe zugrunde, eine Dichtung der eingangs genannten Art derart weiterzuentwickeln, dass diese einfach am abzudichten Maschinenelement montierbar ist, dass die Gefahr von Beschädigungen der einzelnen Ringe, aus denen die Dichtung besteht, auf ein Minimum reduziert ist, dass die Dichtung gleichbleibend gute Gebrauchseigenschaften während einer langen Gebrauchsdauer aufweist und dass eine Spaltextrusion des Dichtrings durch eine radiale Aufspreizung der dem Dichtring zugewandten Stirnseite des Zwischenrings weitgehend vermieden wird.

Diese Aufgabe wird erfindungsgemäß durch eine Dichtung gemäß Anspruch 1 gelöst. Auf vorteilhafte Ausgestaltungen nehmen die Unteransprüche Bezug.

Zur Lösung der Aufgabe ist es vorgesehen, dass der Dichtring auf der dem Zwischenring axial abgewandten Seite eine radial innere und eine radial äußere Axialdichtlippe aufweist, die einander mit radialem Abstand benachbart zugeordnet sind.

Die Ausgestaltung mit der radial inneren und der radial äußeren Axialdichtlippe bewirkt eine selbstverstärkende Dichtlippengeometrie, die durch hydrostatischen Druck den Zwischenring aufgespreizt und damit eine Spaltextrusion des Dichtrings verhindert.

Der anliegende Druck aus der Kraftstoffzuführung presst das Elastomer auf den Zwischenring, dieser verschließt durch seine radiale Aufspreizung seiner dem Dichtring zugewandten Stirnseite die radialen Montagespalte, so dass eine Spaltextrusion des Elastomers weitgehend vermieden wird.

Außerdem ist von Vorteil, dass die Montage der Dichtung am abzudichtenden Maschinenelement einfach ist.

Der Dichtring, der Zwischenring und der Stützring werden zunächst zu der vormontierten Einheit komplettiert. Die vormontierte Einheit wird dann als einstückiges Ganzes an dem abzudichtenden Maschinenelement montiert.
Die Montage der Dichtung am abzudichtenden Maschinenelement ist dadurch größtmöglich vereinfacht und auch die Gefahr einer Beschädigung der Ringe ist durch deren Zusammenfassung zu der vormontierten Einheit auf ein Minimum reduziert.
Dadurch, dass eine Relativverschiebung, insbesondere eine exzentrische Verlagerung der Ringe relativ zueinander, durch die Zusammenfassung zur vormontierten Einheit ausgeschlossen ist, weisen die Ringe, aus denen die Dichtung besteht, stets eine exakte und ideale Position relativ zueinander auf. Diese große Maßhaltigkeit der vormontierten Einheit begünstigt ein gutes Abdichtungsergebnis der Dichtung während einer langen Gebrauchsdauer.

Gemäß einer vorteilhaften Ausgestaltung kann es vorgesehen sein, dass der Zwischenring jeweils stoffschlüssig mit dem Dichtring und dem Stützring verbunden ist. Durch die stoffschlüssige Verbindung sind Undichtigkeiten im Bereich der Trennfugen zwischen den jeweils benachbart aneinander angrenzenden Ringen ausgeschlossen. Außerdem ist von Vorteil, dass die Ringe durch die stoffschlüssige Verbindung dauerhaft besonders exakt zueinander positioniert sind und die Dichtung insgesamt besonders maßhaltig ist. Insbesondere die Gebrauchseigenschaften beeinträchtigende Exzentrizitäten der einzelnen Ringe relativ zueinander gibt es aufgrund der stoffschlüssigen Verbindung nicht. Die Dichtung weist insgesamt nur sehr geringe Montage- und Dichtspalte auf und die Spaltextrusion, insbesondere des Dichtrings, ist auf ein Minimum reduziert.

Der Dichtring kann aus einem FKM-Werkstoff bestehen. Fluorkautschuke weisen eine gute Beständigkeit gegen die meisten abzudichtenden Medien auf und eine gute Beständigkeit gegen hohe und tiefe Temperaturen. Für einen Dichtring ist ein solcher Werkstoff deshalb gut geeignet.

Außerdem sind Fluorkautschuke mit unterschiedlichen Spezifikationen, die an den jeweiligen Anwendungsfall angepasst sind, kostengünstig verfügbar.

Für viele Anwendungsfälle hat es sich als vorteilhaft bewährt, wenn der zur Anwendung gelangende FKM-Werkstoff eine Härte Shore A von 60 bis 90 aufweist. Eine solche Härte Shore A hat sich besonders dann bewährt, wenn die Dichtung als Hochdruckdichtung zur Anwendung gelangt. Hochdruckanwendungen liegen beispielsweise vor, wenn Einspritzventile einer Verbrennungskraftmaschine abgedichtet werden. In solchen Fällen müssen Drücke bis etwa 450 bar abgedichtet werden. Dichtringe mit der genannten Härte Shore A weisen auch dann, wenn sie als Hochdruckdichtungen zur Anwendung gelangen, gleichbleibend gute Gebrauchseigenschaften während einer langen Gebrauchsdauer auf.

Gemäß einer weiteren vorteilhaften Ausgestaltung kann der Zwischenring aus einem PA 6.6-Werkstoff bestehen. Die Verwendung eines solchen Werkstoffs ist von Vorteil, weil dieser eine sehr gute Festigkeit und Zähigkeit aufweist und eine gute Beständigkeit gegen die meisten der abzudichtenden Werkstoffe.

Der Stützring kann aus einem metallischen oder einem Sinter-Werkstoff bestehen. Stützringe aus metallischen Werkstoffen sind besonders einfach und kostengünstig herstellbar; Stützringe aus Sinter-Werkstoff weisen demgegenüber eine besonders große Festigkeit und einen besonders geringen Verschleiß während der bestimmungsgemäßen Verwendung der Dichtung auf.

Anwendung gelangen, gleichbleibend gute Gebrauchseigenschaften während einer langen Gebrauchsdauer auf.
Gemäß einer weiteren vorteilhaften Ausgestaltung kann der Zwischenring aus einem PA 6.6-Werkstoff bestehen. Die Verwendung eines solchen Werkstoffs ist von Vorteil, weil dieser eine sehr gute Festigkeit und Zähigkeit aufweist und eine gute Beständigkeit gegen die meisten der abzudichtenden Werkstoffe. Der Stützring kann aus einem metallischen oder einem Sinter-Werkstoff bestehen. Stützringe aus metallischen Werkstoffen sind besonders einfach und kostengünstig herstellbar; Stützringe aus Sinter-Werkstoff weisen demgegenüber eine besonders große Festigkeit und einen besonders geringen Verschleiß während der bestimmungsgemäßen Verwendung der Dichtung auf.

Der Dichtring kann auf der dem Zwischenring axial zugewandten Seite einen ringförmigen Positionierungsvorsprung aufweisen, der in einer kongruent gestalteten Vertiefung des Zwischenrings angeordnet ist. Hierbei ist von Vorteil, dass durch den Positionierungsvorsprung des Dichtrings und die Vertiefung im Zwischenring die einander berührenden Oberflächen von Dichtring und Zwischenring vergrößert sind. Dadurch kann eine besonders dauerhaltbare Verbindung der beiden Ringe miteinander, zum Beispiel durch Stoffschluss, bewirkt werden. Außerdem wird die Positionierung von Dichtring und Zwischenring relativ zueinander bei der Herstellung der Dichtung vereinfacht. Die Herstellung der Dichtung ist dadurch besonders prozesssicher.

Der Zwischenring kann auf seiner dem Dichtring axial abgewandten Seite eine Haltekralle aufweisen, die eine Hinterschneidung des Stützrings formschlüssig hintergreift. Sind der Zwischenring und der Stützring ausschließlich formschlüssig aneinander festgelegt, kann die Metallscheibe im Anschluss an die Verwendung der Dichtung zerstörungsfrei vom Zwischenring gelöst und sortenrein recycelt werden.

Eine besonders dauerhaltbare Verbindung zwischen dem Zwischenring und dem Stützring kann dadurch erzielt werden, dass die genannten Ringe nicht nur formschlüssig sondern außerdem stoffschlüssig miteinander verbunden sind. Die Trennfuge zwischen diesen beiden Ringen ist durch den zusätzlichen Stoffschluss absolut dicht.

Der Stützring kann auf der dem Zwischenring axial abgewandten Stirnseite eine ringförmige Stützfläche aufweisen. Gelangt die Dichtung zum Beispiel zur Abdichtung eines Einspritzventils einer Verbrennungskraftmaschine zur Anwendung, dient die ringförmige Stützfläche als Montageanschlag für das zu montierende Einspritzventil.

Die benachbart aneinander angrenzenden Flächen von Dichtring, Zwischenring und Stützring können sich bevorzugt spaltfrei anliegend berühren. Die Dichtung weist dadurch eine gute Formstabilität auf, und eine gute Dichtwirkung wird durch diese spaltfreie Berührung begünstigt.

Die Erfindung betrifft außerdem die Verwendung einer zuvor beschriebenen Dichtung zur Abdichtung eines Einspritzventils einer Verbrennungskraftmaschine.

Dichtungen zur Abdichtung eines Einspritzventils einer Verbrennungskraftmaschine waren bisher mehrteilig aufgebaut. Eine vorbekannte Dichtung umfasst dabei zum Beispiel einen Dichtring, der als O-Ring ausgebildet ist, stirnseitig einerseits daran anschließend einen PTFE-Ring, wobei auf der dem O-Ring axial abgewandten Seite des PTFE-Rings ein Zwischenring aus einem polymeren Werkstoff angeordnet ist. Auf der dem PTFE-Ring axial abgewandten Seite des Zwischenrings ist eine Metallscheibe angeordnet.

Der PTFE-Ring ist vorgesehen, um bei Druckbeaufschlagung durch Verformung die vorgegebenen Montagespalte radial zu verschließen. Dies wird bei der hier beanspruchten Erfindung mithilfe des Zwischenrings bzw. der selbstverstärkenden Lippenkontur der Axialdichtlippe sichergestellt.

Ein Ausführungsbeispiel der erfindungsgemäßen Dichtung wird nachfolgend anhand der Figur näher erläutert:
In der Figur ist ein Ausführungsbeispiel der erfindungsgemäßen Dichtung in schematischer Darstellung gezeigt. Die Dichtung wird durch die vormontierte Einheit 4 gebildet, wobei die vormontierte Einheit 4 den Dichtring 1, den Zwischenring 2 und den Stützring 3 umfasst.

Der Dichtring 1 besteht in dem hier gezeigten Ausführungsbeispiel aus einem gummielastischen Werkstoff, der Zwischenring 2 aus einem polymeren Werkstoff und der Stützring 3 aus einem metallischen Werkstoff.

Der Dichtring 1, der Zwischenring 2 und der Stützring 3 sind konzentrisch zueinander angeordnet und stoffschlüssig miteinander verbunden.

Die gezeigte Dichtung gelangt zur Abdichtung eines Einspritzventils einer Verbrennungskraftmaschine zur Anwendung, wobei die Dichtung stirnseitig einerseits den Dichtring 1 und stirnseitig andererseits den Stützring 3 aufweist. Der Dichtring 1 weist auf seine dem Zwischenring 2 axial abgewandten Seite eine radial innere 5.1 und eine radial äußere Axialdichtlippe 5.2 auf, die einander mit radialem Abstand benachbart zugeordnet sind. Die radial innere Axialdichtlippe 5.1 dichtet gegenüber der Railanschlussöffnung radial nach außen, während die radial äußere Axialdichtlippe 5.2 den kraftstoffführenden Anschluss am Einspritzventil radial nach innen abdichtet.

Auf der den Axialdichtlippen 5.1, 5.2 axial abgewandten Seite der Dichtung ist die ringförmige Stützfläche 10 als Bestandteil des Stützrings vorgesehen.

Alle Ringe, aus denen die vormontierte Einheit 4 besteht, sind im hier gezeigten Ausführungsbeispiel stoffschlüssig miteinander verbunden. Dadurch sind die Trennfugen zwischen den einzelnen Ringen absolut dicht und die Dichtung ist besonders einfach handhabbar, weil der mit der Montage betraute Monteur lediglich die vormontierte Einheit 4 als Ganzes montieren muss. Die Gefahr von Montagefehlern ist dadurch auf ein Minimum reduziert.

Der ringförmige Positionierungsvorsprung 6 des Dichtrings 1 schmiegt sich an die kongruent gestaltete Vertiefung 7 des Zwischenrings 2 an; der Zwischenring 2 weist eine Haltekralle 8 auf, die in eine Hinterschneidung 9 des Stützrings 3 formschlüssig eingreift.

Die erfindungsgemäße Dichtung ist einfach und kostengünstig herstellbar sowie problemlos zu handhaben.

## Patentansprüche

1. Dichtung, umfassend einen Dichtring (1) aus einem gummielastischen Werkstoff, einen Zwischenring (2) aus einem polymeren Werkstoff und einen Stützring (3), wobei der Dichtring (1), der Zwischenring (2) und der Stützring (3) konzentrisch zueinander angeordnet sind, wobei der Dichtring (1) und der Stützring (3) jeweils auf den einander axial abgewandten Seiten des Zwischenrings (2) angeordnet sind und wobei der Dichtring (1), der Zwischenring (2) und der Stützring (3) eine vormontierte Einheit (4) bilden, **dadurch gekennzeichnet, dass** der Dichtring (1) auf der dem Zwischenring (2) axial abgewandten Seite eine radial innere (5.1) und eine radial äußere Axialdichtlippe (5.2) aufweist, die einander mit radialem Abstand benachbart zugeordnet sind.

2. Dichtung nach Anspruch 1, **dadurch gekennzeichnet, dass** der Zwischenring (2) jeweils stoffschlüssig mit dem Dichtring (1) und dem Stützring (3) verbunden ist.

3. Dichtung nach einem der Ansprüche 1 oder 2, **dadurch gekennzeichnet, dass** der Dichtring (1) aus einem FKM-Werkstoff besteht.

4. Dichtung nach Anspruch 3, **dadurch gekennzeichnet, dass** der FKM-Werkstoff eine Härte Shore A von 60 bis 90 aufweist.

5. Dichtung nach einem der Ansprüche 1 bis 4, **dadurch gekennzeichnet, dass** der Zwischenring (2) aus einem PA 6.6-Werkstoff besteht.

6. Dichtung nach einem der Ansprüche 1 bis 5, **dadurch gekennzeichnet, dass** der Stützring (3) aus einem metallischen oder einem Sinter-Werkstoff besteht.

7. Dichtung nach einem der Ansprüche 1 bis 6, **dadurch gekennzeichnet, dass** der Dichring (1) auf der dem Zwischenring (2) axial zugewandten Seite einen ringförmigen Positionierungsvorsprung (6) aufweist, der in einer kongruent gestalteten Vertiefung (7) des Zwischenrings (2) angeordnet ist.

8. Dichtung nach einem der Ansprüche 1 bis 7, **dadurch gekennzeichnet, dass** der Zwischenring (2) auf seiner dem Dichtring (1) axial abgewandten Seite eine Haltekralle (8) aufweist, die eine Hinterschneidung (9) des Stützrings (3) formschlüssig hintergreift.

9. Dichtung nach einem der Ansprüche 1 bis 8, **dadurch gekennzeichnet, dass** der Stützring (3) auf der dem Zwischenring (2) axial abgewandten Stirnseite eine ringförmige Stützfläche (10) aufweist.

10. Dichtung nach einem der Ansprüche 1 bis 9, **dadurch gekennzeichnet, dass** sich die benachbart aneinander angrenzenden Flächen von Dichtring (1), Zwischenring (2) und Stützring (3) spaltfrei anliegend berühren.

11. Verwendung einer Dichtung nach einem der Ansprüche 1 bis 10 zur Abdichtung eines Einspritzventils einer Verbrennungskraftmaschine.

## Claims

1. Seal, comprising a sealing ring (1) made from an elastomeric material, an intermediate ring (2) made from a polymeric material and a supporting ring (3), the sealing ring (1), the intermediate ring (2) and the supporting ring (3) being arranged concentrically with respect to one another, the sealing ring (1) and the supporting ring (3) being arranged in each case on the sides of the intermediate ring (2) which face away axially from one another, and the sealing ring (1), the intermediate ring (2) and the supporting ring (3) forming a pre-assembled unit (4), **characterized in that**, on the side which faces axially away from the intermediate ring (2), the sealing ring (1) has a radially inner (5.1) and a radially outer axial sealing lip (5.2) which are assigned to one another adjacently at a radial spacing.

2. Seal according to Claim 1, **characterized in that** the intermediate ring (2) is connected in each case in a material-to-material manner tc the sealing ring (1) and the supporting ring (3).

3. Seal according to either of Claims 1 and 2, **characterized in that** the sealing ring (1) is composed of an FKM material.

4. Seal according to Claim 3, **characterized in that** the FKM material has a Shore A hardness of from 60 to 90.

5. Seal according to one of Claims 1 to 4, **characterized in that** the intermediate ring (2) is composed of a PA6.6 material.

6. Seal according to one of Claims 1 to 5, **characterized in that** the supporting ring (3) is composed of a metallic or a sintered material.

7. Seal according to one of Claims 1 to 6, **characterized in that**, on the side which faces the intermediate ring (2) axially, the sealing ring (1) has an annular positioning projection (6) which is arranged in a congruently designed depression (7) of the intermediate ring (2).

8. Seal according to one of Claims 1 to 7, **characterized in that**, on its side which faces axially away from the sealing ring (1), the intermediate ring (2) has a holding claw (8) which engages in a positively locking manner behind an undercut (9) of the supporting ring (3).

9. Seal according to one of Claims 1 to 8, **characterized in that** the supporting ring (3) has an annular supporting face (10) on the send side which faces axially away from the intermediate ring (2).

10. Seal according to one of Claims 1 to 9, **characterized in that** those faces of the sealing ring (1), intermediate ring (2) and supporting ring (3) which adjoin one another in an adjacent manner are in bearing contact with one another in a gap-free manner.

11. Use of a seal according to one of Claims 1 to 10 for sealing an injection valve of an internal combustion engine.

## Revendications

1. Joint d'étanchéité, comprenant une bague d'étanchéité (1) en matériau ayant l'élasticité du caoutchouc, une bague intermédiaire (2) en un matériau polymère et une bague de support (3), la bague d'étanchéité (1), la bague intermédiaire (2) et la bague de support (3) étant disposées concentriquement l'une à l'autre, la bague d'étanchéité (1) et la bague de support (3) étant à chaque fois disposées sur les côtés axialement opposés l'un à l'autre de la bague intermédiaire (2) et la bague d'étanchéité (1), la bague intermédiaire (2) et la bague de support (3) formant une unité prémontée (4), **caractérisé en ce que** la bague d'étanchéité (1) présente, sur le côté axialement opposé à la bague intermédiaire (2), une lèvre d'étanchéité axiale radialement interne (5.1) et une lèvre d'étanchéité radialement externe (5.2), lesquelles sont associées l'une à l'autre en position adjacente avec un espacement radial.

2. Joint d'étanchéité selon la revendication 1, **caractérisé en ce que** la bague intermédiaire (2) est à chaque fois connectée par engagement par liaison de matière à la bague d'étanchéité (1) et à la bague de support (3).

3. Joint d'étanchéité selon l'une quelconque des revendications 1 ou 2, **caractérisé en ce que** la bague d'étanchéité (1) se compose d'un matériau à base de FKM.

4. Joint d'étanchéité selon la revendication 3, **caractérisé en ce que** le matériau à base de FKM présente une dureté Shore A de 60 à 90.

5. Joint d'étanchéité selon l'une quelconque des revendication 1 à 4, **caractérisé en ce que** la bague intermédiaire (2) se compose d'un matériau à base de PA 6.6.

6. Joint d'étanchéité selon l'une quelconque des revendications 1 à 5, **caractérisé en ce que** la bague de support (3) se compose d'un matériau métallique ou fritté.

7. Joint d'étanchéité selon l'une quelconque des revendications 1 à 6, **caractérisé en ce que** la bague d'étanchéité (1) présente, sur le côté tourné axialement vers la bague intermédiaire (2), une saillie de positionnement annulaire (6) qui est disposée dans un renfoncement de configuration correspondante (7) de la bague intermédiaire (2).

8. Joint d'étanchéité selon l'une quelconque des revendications 1 à 7, **caractérisé en ce que** la bague intermédiaire (2) présente sur son côté opposé axialement à la bague d'étanchéité (1) une griffe de retenue (8) qui vient en prise par engagement par correspondance de formes avec une contre-dépouille (9) de la bague de support (3).

9. Joint d'étanchéité selon l'une quelconque des revendications 1 à 8, **caractérisé en ce que** la bague de support (3) présente, sur le côté frontal opposé axialement à la bague intermédiaire (2), une surface de support annulaire (10).

10. Joint d'étanchéité selon l'une quelconque des revendications 1 à 9, **caractérisé en ce que** les surfaces mutuellement adjacentes les unes aux autres de la bague d'étanchéité (1), de la bague intermédiaire (2) et de la bague de support (3) sont en contact d'appui sans jeu.

11. Utilisation d'un joint d'étanchéité selon l'une quelconque des revendication 1 à 10 pour l'étanchéité d'une soupape d'injection d'un moteur à combustion interne.
